(19) **Europäisches Patentamt**
**European Patent Office**
**Office européen des brevets**

(11) **EP 3 124 161 B1**

(12) **FASCICULE DE BREVET EUROPEEN**

(45) Date de publication et mention
de la délivrance du brevet:
**06.02.2019 Bulletin 2019/06**

(51) Int Cl.:
***B23K 20/06*** (2006.01)        ***B21D 39/00*** (2006.01)
***F16C 3/02*** (2006.01)        ***F16L 23/00*** (2006.01)
***B23K 101/00*** (2006.01)        ***B23K 101/06*** (2006.01)

(21) Numéro de dépôt: **16178485.5**

(22) Date de dépôt: **07.07.2016**

(54) **ORGANE DE LIAISON MECANIQUE A SOUDER PAR IMPULSION MAGNETIQUE A UN TUBE, ET PROCEDE DE FABRICATION D'UN TEL ORGANE DE LIAISON MECANIQUE**

MECHANISCHES VERBINDUNGSORGAN ZUM MAGNETISCHEN IMPULSSCHWEISSEN AN EIN ROHR, UND HERSTELLUNGSVERFAHREN EINES SOLCHEN MECHANISCHEN VERBINDUNGSORGANS

MECHANICAL LINK MEMBER FOR MAGNETIC PULSE WELDING TO A TUBE, AND METHOD OF MANUFACTURING SUCH A MECHANICAL LINK MEMBER

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **23.07.2015 FR 1501575**

(43) Date de publication de la demande:
**01.02.2017 Bulletin 2017/05**

(73) Titulaire: **Airbus Helicopters**
**13725 Marignane Cedex (FR)**

(72) Inventeurs:
• **EL-ARAB, Mohamad**
**13100 Aix-en-Provence (FR)**

• **DURAND, Philippe**
**13130 Berre L'Etang (FR)**
• **SUDARINI, Frédéric**
**13009 Marseille (FR)**

(74) Mandataire: **GPI & Associés**
**EuroParc de Pichaury**
**Bâtiment B2 - 1er Etage**
**1330, rue Guillibert de la Lauzière**
**13856 Aix-en-Provence Cedex 3 (FR)**

(56) Documents cités:
**EP-A1- 0 967 428        EP-A1- 1 649 963**
**FR-A1- 2 450 145        US-A- 4 702 543**
**US-A- 5 981 921**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

**EP 3 124 161 B1**

**Description**

La présente invention concerne un organe de liaison mécanique, un procédé de fabrication d'un organe de liaison conformément au préambule des revendications 1 et 10 (voir, par exemple, FR 2450145), un ensemble soudé comprenant un tel organe de liaison (voir revendication 11) et un procédé de soudure par impulsion magnétique d'un tel organe de liaison mécanique à un tube (voir revendication 12). L'organe de liaison mécanique peut en particulier être une bride de fixation.

L'invention se situe donc dans le domaine technique des procédés de soudure par impulsion magnétique.

Un tel procédé de soudure par impulsion magnétique est aussi connu sous l'acronyme « MPW » correspondant à l'expression anglaise « Magnetic Pulse Welding ». Ce procédé de soudure par impulsion magnétique consiste à souder deux pièces l'une contre l'autre en mettant en oeuvre des forces d'origine magnétique.

Pour souder une bride de fixation à tube, une extrémité de la bride de fixation est insérée dans le tube sur une longueur dite « longueur de recouvrement » au niveau d'une zone de soudure.

Dès lors, un dispositif de soudure par impulsion magnétique comporte un inducteur électromagnétique agencé au droit de la zone de soudure. Un tel inducteur se présente sous la forme d'une bobine électrique avec une spire unique et se comporte donc comme une bobine électrique. Eventuellement, l'inducteur peut comporter un concentrateur annulaire en une ou plusieurs parties. Ce concentrateur est effilé pour diriger précisément un champ magnétique intense vers la zone de soudure.

Le document EP 1649963 présente un inducteur de ce type.

Pour souder la bride de fixation au tube, l'énergie électrique est stockée dans un accumulateur d'un dispositif de soudure. En particulier, cette énergie électrique est stockée dans plusieurs condensateurs agencés en parallèle.

Lorsqu'un seuil de tension électrique de cette énergie électrique est atteint, un éclateur décharge très rapidement dans l'inducteur l'énergie électrique stockée dans l'accumulateur, à savoir selon une durée de l'ordre de quelques microsecondes. Un courant électrique alternatif est alors généré dans l'inducteur, par exemple un courant électrique d'une intensité de l'ordre de plusieurs centaines voire milliers de Kilo-Ampères.

La circulation de ce courant électrique dans l'inducteur génère brutalement un champ d'induction magnétique. Ce champ magnétique génère dans le tube des courants électriques induits, dénommés classiquement « courant de Foucault » ou « eddy current » en langue anglaise.

L'interaction entre le champ magnétique créé par l'inducteur et les courants induits présents dans le tube génère des forces d'origine magnétique qui agissent mécaniquement sur le tube. Ces forces agissent sur le tube en propulsant le tube vers la bride de fixation. En particulier, une onde de choc parcourt le tube et propulse ce tube contre la bride de fixation. Le tube heurte la bride de fixation avec violence et se déforme plastiquement dans la zone de soudure.

Le tube est alors soudé à la bride de fixation.

Ce procédé est efficace. Toutefois, le dispositif de soudure peut s'avérer difficile à régler pour obtenir une soudure de qualité entre le tube et la bride de fixation.

En particulier, la bride de fixation et le tube doivent être coaxiaux pour obtenir un résultat intéressant. Un tel positionnement peut être délicat à obtenir.

Dans le cadre d'une transmission mécanique d'un aéronef, un arbre de transmission de plusieurs mètres de long par exemple doit être soudé à une bride de fixation courte. Cette bride de fixation s'étend longitudinalement d'une première extrémité libre vers une deuxième extrémité à souder au tube. Classiquement, la deuxième extrémité à une forme tubulaire présentant un premier diamètre. La première extrémité peut comprendre une collerette qui s'étend radialement.

Pour positionner la bride de fixation par rapport à l'arbre de transmission, le dispositif de soudure comporte deux pièces isolantes disposées longitudinalement de part et d'autre de l'inducteur. Chaque pièce isolante est dite « isolante » dans la mesure où cette pièce isolante est réalisée à partir d'un matériau isolant électriquement pour ne pas perturber l'opération de soudure par impulsion magnétique.

Une première pièce isolante peut entourer le tube alors que la deuxième pièce isolante entoure la bride de fixation.

En particulier, la deuxième pièce isolante peut comporter une gorge radiale dans laquelle est agencée la collerette de la première extrémité de la bride de fixation. La gorge radiale tend à positionner de manière adéquate la bride de fixation en accueillant la collerette de la bride de fixation.

Cette configuration est intéressante. Toutefois, le procédé de soudure par impulsion magnétique impose de ménager un jeu radial entre la bride de fixation et le tube dans la zone de soudure. En raison de ce jeu, la bride de fixation peut éventuellement être désalignée par rapport à l'axe de symétrie du tube.

Pour y remédier, la longueur de la zone de soudure peut être maximisée. Toutefois, une zone de soudure de grande longueur induit une dispersion importante de l'onde de choc générée dans le tube suite à la sollicitation de l'inducteur. La soudure obtenue peut alors être de médiocre qualité.

Le document WO 2014/092871 propose de souder un tube à un organe de liaison mécanique par une soudure par impulsion magnétique. L'organe de liaison mécanique est alors inséré dans le tube. Pour optimiser la soudure, une face interne du tube en regard de l'organe de liaison mécanique est usinée pour présenter une épaisseur localement réduite.

Le document EP 1342530 vise à souder un organe de liaison mécanique à un tube. Cet organe de liaison mécanique comprend successivement selon une direction longitudinale une extrémité libre munie d'un ensemble d'articulation, une portion centrale cylindrique et une portion d'extrémité.

La portion d'extrémité est inscrite dans un cercle présentant un premier diamètre qui est inférieur au deuxième diamètre d'un cercle contenant la portion centrale. La portion d'extrémité est évasée selon un sens longitudinal partant de la portion centrale et dirigé vers l'intérieur du tube.

Cet organe de liaison mécanique ne présente donc pas une collerette du type décrit précédemment qui coopère avec une pièce isolante de maintien.

Le document US 2004/0089698 présente une méthode pour souder un tube à une pièce munie d'une surface extérieure qui n'est pas circulaire.

Le document EP 1649963 décrit un organe de liaison mécanique. Cet organe de liaison mécanique comprend successivement selon une direction longitudinale une extrémité libre munie d'un ensemble d'articulation, une portion centrale cylindrique et une portion d'extrémité cylindrique.

La portion centrale cylindrique saille radialement de l'ensemble d'articulation et de la portion d'extrémité.

Dès lors, l'ensemble d'articulation est fixé dans un montage d'un ensemble d'articulation pour aligner un axe central de l'ensemble d'articulation avec un axe central d'un tube. Ce tube est ainsi enfilé autour de la portion d'extrémité pour être plaqué contre la portion centrale. Enfin, une bague d'entraînement est enfilée autour du tube au droit de la portion d'extrémité. Cette bague d'entraînement présente une conductivité électrique plus élevée que la conductivité électrique du tube.

Un inducteur est alors muni d'une bobine électrique et d'un concentrateur visant à focaliser le champ magnétique généré sur la bague d'entraînement. Une bague isolante entoure en outre la portion centrale et la bague d'entraînement.

Le document CN 204094301 (U) présente un dispositif de soudure pour souder par impulsion magnétique un tube dans un autre tube. Le dispositif de soudure comporte un inducteur muni d'un concentrateur, et deux pièces isolantes disposées de part et d'autre du concentrateur.

Les documents FR 2450145 et US 5981921 sont aussi connus.

Le document EP 0967428 est éloigné du domaine de l'invention en ayant trait à un raccord à sertir à un tuyau.

La présente invention a alors pour objet de proposer un organe de liaison mécanique tendant à réduire une incertitude de positionnement de l'organe de liaison mécanique par rapport au tube.

Un organe de liaison mécanique et un procédé de fabrication d'un organe de liaison mécanique selon la présente invention sont défnis dans les revendications 1 et 10.

De plus, la deuxième zone extrémale comporte un anneau de liaison qui s'étend longitudinalement à partir du plan de référence, l'organe de liaison mécanique comportant une collerette martyre dite « deuxième collerette », la deuxième collerette étant inscrite dans un cercle ayant un deuxième diamètre qui est inférieur au premier diamètre, l'organe de liaison mécanique comportant une gorge de dégagement, la gorge de dégagement s'étendant selon l'axe de symétrie entre la deuxième collerette et l'anneau de liaison sur une longueur dite « longueur de gorge », le deuxième diamètre étant fonction au moins de la longueur de gorge et d'une distance prédéterminée devant séparer la deuxième collerette et ladite face conique, l'anneau de liaison étant inscrit dans un cercle présentant un diamètre qui est inférieur au deuxième diamètre.

Par ailleurs, le tube et l'organe de liaison mécanique sont réalisés à partir de matériaux usuels permettant de mettre en oeuvre un procédé de soudure par impulsion magnétique. De tels matériaux peuvent être des métaux, tel qu'un alliage d'aluminium par exemple.

L'organe de liaison mécanique peut par exemple être une bride de fixation, et le tube peut être un arbre de transmission d'un mouvement et d'un couple.

Par ailleurs, cet organe de liaison mécanique comporte une première collerette inscrite dans un cercle d'un grand diamètre. La première collerette n'est donc pas nécessairement annulaire. Cette première collerette peut par exemple avoir la forme d'un polygone. Le terme « collerette » désigne alors une partie de l'organe de liaison mécanique saillant au moins radialement d'une portion centrale annulaire.

Cette première collerette est localisée au niveau d'une première zone extrémale opposée à la deuxième zone extrémale de l'organe de liaison mécanique devant être soudée au tube.

De manière innovante et surprenante, l'organe de liaison mécanique comporte une deuxième collerette interposée entre l'anneau de liaison de la deuxième zone extrémale et la première collerette. La deuxième collerette est ainsi décalée longitudinalement par rapport à la première collerette.

Cette deuxième collerette permet de positionner l'organe de fixation précisément par rapport au tube. En effet, un moyen d'isolation et de maintien peut enserrer les deux collerettes. La deuxième collerette représente alors un nouvel épaulement d'orientation qui permet de positionner de manière adéquate l'organe de liaison mécanique par rapport au tube et par rapport à l'inducteur.

L'incertitude de positionnement observée sur certains arts antérieurs est alors réduite.

Par ailleurs, la deuxième collerette est une collerette martyre. En effet, le diamètre de la deuxième collerette permet à cette deuxième collerette de servir de face d'appui contre un moyen de maintien.

De plus, lorsque l'organe de liaison mécanique est soudé à un tube, la deuxième collerette peut être localement limée pour équilibrer l'ensemble comprenant la deuxième collerette et le tube.

Le terme « martyre » signifie donc que la deuxième collerette peut être limée localement.

L'utilisation d'une telle deuxième collerette parait incompatible avec la mise en oeuvre d'un procédé de soudure par impulsion magnétique. Des préjugés tendent effectivement à indiquer que cette deuxième collerette génère des interférences magnétiques empêchant la réalisation d'une soudure acceptable par le biais d'un procédé de soudure par impulsion magnétique.

Néanmoins, l'invention permet de définir une deuxième collerette ayant un impact négatif limité, voire une deuxième collerette qui permet de réaliser une soudure optimale.

A cet effet et conformément à la présente invention, le deuxième diamètre de la deuxième collerette est déterminé en fonction d'une gorge de dégagement séparant longitudinalement la deuxième collerette de l'anneau d'extrémité et en fonction d'une distance prédéterminée par le constructeur.

Cette distance prédéterminée est par exemple déterminée par essais par le constructeur. La distance prédéterminée dépend des caractéristiques des matériaux utilisés et/ou des caractéristiques de l'inducteur. Par exemple, la distance prédéterminée est au moins égale à 10 millimètres.

Une fois que la distance prédéterminée est établie, la deuxième collerette est dimensionnée en fonction de la longueur de gorge. Une gorge de dégagement présentant une longueur de gorge importante peut alors induire une deuxième collerette ayant un deuxième diamètre important. En revanche, une gorge de dégagement présentant une longueur de gorge réduite peut alors induire une deuxième collerette ayant un deuxième diamètre faible.

Par suite, l'organe de liaison mécanique comporte deux collerettes aptes à coopérer avec un moyen d'isolation et de maintien pour permettre le positionnement adéquat de cet organe de liaison mécanique par rapport au tube correspondant.

L'organe de liaison mécanique peut de plus comporter une ou plusieurs des caractéristiques qui suivent.

Ainsi, le deuxième diamètre est conformément à l'invention inférieur au premier diamètre. De plus, le deuxième diamètre est conformément à l'invention au plus grand diamètre de l'anneau de liaison.

Ce deuxième diamètre peut être déterminé à l'aide de la relation suivante :

$$\varnothing Col = \varnothing brid + 2*(B/tg\ \alpha - Li/sin\ \alpha)$$

où « $\varnothing Col$ » représente le deuxième diamètre, « $\varnothing brid$ » représente un diamètre de l'anneau de liaison, « B » représente ladite longueur de gorge, « tga » représente la tangente de l'angle de référence $\alpha$, « Li » représente ladite distance prédéterminée, « $sin\ \alpha$ » représente le sinus de l'angle de référence $\alpha$, « * » représente le signe de la multiplication, « / » représente le signe de la division, « + » représente le signe de l'addition et « - » représente le signe de la soustraction.

Cette relation permet d'obtenir une deuxième collerette ne gênant pas la réalisation d'une soudure par impulsion magnétique.

Par ailleurs, le diamètre de l'anneau de liaison peut être fonction d'au moins un jeu radial à garantir entre le tube et l'anneau de liaison avant la soudure.

Ce jeu radial permet la propagation d'une onde de choc dans le tube lors de la soudure.

Par exemple, le tube s'étendant radialement d'une paroi intérieure annulaire à souder à l'organe de liaison mécanique vers une paroi extérieure annulaire en regard de l'inducteur sur une épaisseur donnée dite « épaisseur de tube », le diamètre de l'anneau de liaison et notamment d'un cercle dans lequel est inscrit l'anneau de liaison est déterminé à l'aide de la relation suivante :

$$\varnothing brid = \varnothing tub - 2*e1 - 2*Gp$$

où « $\varnothing brid$ » représente le diamètre de l'anneau de liaison, « $\varnothing tub$ » représente un diamètre prédéterminé de ladite paroi intérieure et par exemple d'un cercle dans lequel est inscrit le tube, « e1 » représente ladite épaisseur de tube, « Gp » représente ledit jeu radial, « * » représente le signe de la multiplication, et « - » représente le signe de la soustraction.

Le jeu radial peut être une constante prédéterminée, par exemple une constante égale à un millimètre.

De manière alternative, le tube s'étendant radialement d'une paroi intérieure à souder à l'organe de liaison mécanique vers une paroi extérieure en regard de l'inducteur sur une épaisseur donnée dite « épaisseur de tube », le jeu radial est compris entre le double de ladite épaisseur de tube et le triple de ladite épaisseur de tube.

Par ailleurs, l'anneau de liaison s'étendant selon l'axe de symétrie sur une longueur dite « longueur d'extension », la face interne s'étendant selon l'axe de symétrie sur une longueur donnée dite « longueur d'induction », la longueur d'extension peut être égale à la somme de la longueur d'induction et d'une longueur prédéterminée dite « longueur dépassante ».

La longueur dépassante peut être déterminée par essais. Si la longueur dépassante est trop importante ou trop réduite, la soudure ne sera probablement pas obtenue. La longueur dépassante nécessaire peut alors être comprise entre une valeur minimale et une valeur maximale qui dépend par exemple de l'inducteur utilisé, et des matériaux utilisés.

Par ailleurs, l'anneau de liaison peut présenter circonférentiellement une pluralité de lobes.

L'anneau de liaison peut présenter un profil comprenant circonférentiellement une succession de creux et de protubérances qui, par interférence de formes, permettent de sécuriser la tenue en couple de l'ensemble soudé. Le terme « lobe » désigne alors dans ce contexte une protubérance.

Selon le procédé de la présente invention (voir revendication 10), la deuxième zone extrémale comportant un anneau de liaison destiné à s'étendre longitudinalement à partir du plan de référence, une collerette dite « deuxième collerette » étant agencée sur ledit organe de liaison mécanique, ladite deuxième collerette étant inscrite dans un cercle ayant un deuxième diamètre qui est inférieur au premier diamètre, une gorge de dégagement étant agencée sur ledit organe de liaison mécanique, ladite gorge de dégagement s'étendant selon l'axe de symétrie entre la deuxième collerette et ledit anneau de liaison sur une longueur dite « longueur de gorge », on détermine ledit deuxième diamètre en fonction de ladite longueur de gorge et d'une distance prédéterminée devant séparer ladite deuxième collerette et ladite face conique, ledit deuxième diamètre étant supérieur à un diamètre d'un cercle dans lequel est inscrit l'anneau de liaison..

En outre, le tube vient longitudinalement en butée contre l'anneau intermédiaire, au niveau du plan de jonction précité. Or, le plan de jonction est séparé longitudinalement de la deuxième gorge de positionnement par une distance supérieure à ladite longueur de gorge. Par suite, le moyen de maintien garantit que le tube ne recouvre pas conformément à l'invention la gorge de dégagement.

Dès lors, l'invention va en outre à l'encontre de préjugés, en évitant que le tube tende à présenter un bord tombant dans une gorge d'un organe de liaison mécanique. Cette caractéristique peut tendre à optimiser la résistance de l'ensemble soudé contrairement aux préjugés existants.

L'invention et ses avantages apparaîtront avec plus de détails dans le cadre de la description qui suit avec des exemples donnés à titre illustratif en référence aux figures annexées qui représentent :

- la figure 1, une vue d'un ensemble de soudure selon l'invention,

- la figure 2, une vue explicitant cet ensemble de soudure, et

- la figure 3, une vue illustrant un organe de liaison mécanique ayant plusieurs lobes.

Les éléments présents dans plusieurs figures distinctes sont affectés d'une seule et même référence.

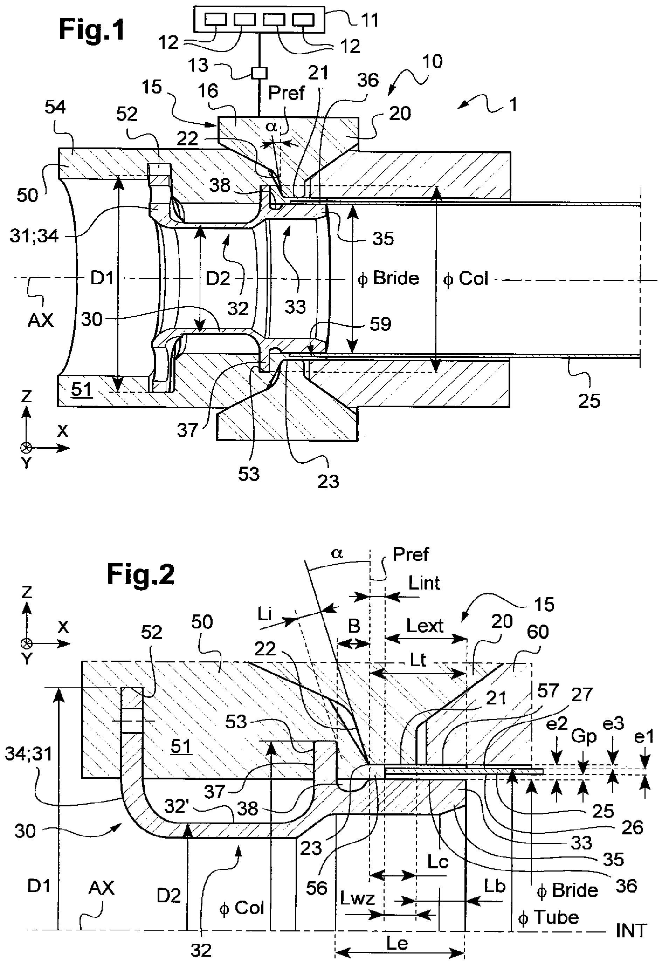

On note que trois directions X, Y et Z orthogonales les unes par rapport aux autres sont représentées sur les figures 1 et 2.

La direction X est dite longitudinale. Le terme « longueur » est relatif à une dimension longitudinale du dispositif selon cette direction longitudinale X.

Une autre direction Y est dite transversale. Enfin, une troisième direction Z est dite d'élévation. La direction transversale et à la direction en élévation définissent conjointement un plan dit « plan vertical ».

Le terme « radial » fait référence à une direction partant de la direction longitudinale et parallèle au plan vertical. Le terme « épaisseur » est alors relatif à une dimension d'un organe selon une direction radiale.

La figure 1 présente un ensemble de soudure 1 selon l'invention pour effectuer une soudure par impulsion magnétique.

Cet ensemble de soudure 1 comprend un accumulateur 11 pouvant accumuler une énergie électrique. Dès lors, cet accumulateur 11 est muni par exemple d'une pluralité de condensateurs 12.

De plus, le dispositif de soudure comporte un inducteur 15 qui est relié à l'accumulateur 11 par un éclateur 13.. Cet inducteur 15 constitue lui-même une bobine électrique 16. De plus, l'inducteur peut comprendre un concentrateur 20 (en une ou plusieurs parties)

L'inducteur 15 est utilisé pour souder par impulsion magnétique un organe de liaison mécanique 30 à un tube 25. En particulier, l'organe de liaison s'étend longitudinalement le long d'un axe de symétrie AX d'une première zone extrémale 31 libre vers une deuxième zone extrémale 33 en passant par une zone centrale 32. L'axe de symétrie AX est qualifié de symétrie dans la mesure où certaines portions des pièces décrites sur les figures présentent une symétrie de révolution par rapport à cet axe.

La deuxième zone extrémale 33 comprend conformément à l'invention un anneau dit « anneau de liaison 35 » qui est inséré dans le tube 25 pour être soudé à ce tube 25.

Par ailleurs, l'ensemble de soudure est muni d'un moyen d'isolation et de maintien 50 et d'un organe d'isolation et de maintien 60 qui s'étendent longitudinalement de part et d'autre de la face interne 21 de l'inducteur. Dès lors, le moyen d'isolation et de maintien 50 est interposé entre l'inducteur 15 et l'organe de liaison mécanique 30. L'organe d'isolation et de maintien 60 est interposé entre l'inducteur et le tube.

Dans ce contexte, le moyen d'isolation et de maintien 50 et l'organe d'isolation et de maintien 60 visent d'une part à positionner de manière adéquate l'organe de liaison mécanique 30 et le tube 25 l'un par rapport à l'autre. En particulier, le moyen d'isolation et de maintien 50 et l'organe d'isolation et de maintien 60 visent à aligner un axe de symétrie de l'organe de liaison mécanique 30 avec un axe de symétrie du tube selon l'axe de symétrie AX de l'ensemble de soudure.

De plus, le moyen d'isolation et de maintien 50 et l'organe d'isolation et de maintien 60 visent à concentrer les champs magnétiques générés lors de la soudure dans une zone de soudure prédéterminée.

Par ailleurs, le moyen d'isolation et de maintien 50 s'étend longitudinalement d'un corps 51 creux vers une portion annulaire de guidage 55 creuse. Dès lors, le corps 51 entoure la première zone extrémale 31 et la zone centrale 32 de l'organe de liaison mécanique 30, alors que la portion annulaire de guidage 55 entoure la deuxième zone extrémale 33 de l'organe de liaison mécanique 30.

De plus, le moyen d'isolation et de maintien 50 peut être composé de plusieurs parties 54 indépendantes pour pouvoir être disposé autour de l'organe de liaison mécanique 30. Chaque partie résulte par exemple d'une coupe du moyen d'isolation et de maintien 50 selon deux plans radiaux distincts. Par exemple, le moyen d'isolation et de maintien 50 comporte deux demi-coquilles.

La figure 2 détaille les caractéristiques de l'ensemble de soudure 1.

Indépendamment de son architecture, l'inducteur 15 s'étend radialement par rapport à un axe de symétrie AX. En particulier, l'inducteur s'étend radialement à partir d'une face sensiblement cylindrique dite « face interne 21 ».

En particulier, l'inducteur présente deux faces s'étendant radialement à partir de la face interne. Une de ces faces est dénommée « face conique 22 » en raison de sa géométrie. Cette face conique 22 est alors en regard du moyen d'isolation et de maintien 50 ainsi que de la première zone extrémale 31 de l'organe de liaison mécanique 30. L'autre face qui s'étend à partir de la face interne est au contraire en regard de l'organe d'isolation et de maintien 60.

Dans ce cadre l'expression « en regard » fait référence à un sens de visualisation allant de l'intérieur de l'inducteur vers un objet en passant par la face concernée.

La face conique est ainsi reliée à la face interne au niveau d'un cercle dénommé par commodité « cercle d'interface 23 ». La face conique 22 présente alors un angle dit « angle de référence a » avec un plan de référence Pref, ce plan de référence étant un plan vertical perpendiculaire à l'axe de symétrie AX et contenant le cercle d'interface 23. L'angle de référence a représente une donnée d'entrée liée à l'inducteur utilisé. L'expression « donnée d'entrée » fait référence à une donnée permettant par exemple d'obtenir l'organe de liaison mécanique requis.

De même, la face interne 21 s'étend longitudinalement selon l'axe de symétrie AX sur une longueur donnée dite « longueur d'induction Lc ». Cette longueur d'induction Lc est aussi une donnée d'entrée.

Cet inducteur est utilisé pour souder un tube 25 autour d'un organe de liaison mécanique 30. Ce tube 25 est de forme cylindrique. Par suite, le tube 25 s'étend radialement d'une paroi intérieure 26 vers une paroi extérieure 27 sur une épaisseur donnée dite « épaisseur de tube e1 ». La paroi intérieure 26 est en regard de l'organe de liaison mécanique 30. A l'inverse, la paroi extérieure 27 est en regard de l'inducteur 15.

L'épaisseur de tube e1 représente alors une donnée d'entrée.

De même, la paroi extérieure 27 présente un diamètre $\varnothing$tub qui représente une donnée d'entrée.

Les matériaux du tube et de l'organe de liaison peuvent aussi représenter des données d'entrée.

Dans ce contexte, l'organe de liaison mécanique 30 comporte une collerette dite « première collerette 34 » à sa première zone extrémale 31.

Cette première collerette 34 est en regard de la face conique 22 de l'inducteur. De plus, cette première collerette 34 est inscrite dans un cercle présentant un diamètre dit « premier diamètre D1 ».

Dès lors, la zone centrale 32 s'étend longitudinalement de la première collerette 34 jusqu'à un pied de l'anneau de liaison 35 de la deuxième zone extrémale 33. Par suite, cet anneau de liaison 35 s'étend longitudinalement selon l'axe de symétrie AX de ce pied vers l'intérieur INT du tube 25. En particulier, ce pied est situé au droit du cercle d'interface 23, et donc au niveau du plan de référence Pref. La première collerette 34, la zone centrale 32 et la deuxième zone extrémale 33 forment une pièce monobloc.

Plus précisément, la zone centrale 32 comprend successivement un anneau central 32', une deuxième collerette 37 et une gorge de dégagement 38.

L'anneau central présente un diamètre dit « diamètre central D2 » qui est inférieur au premier diamètre D1 de la première collerette 34. Dès lors, la première collerette 34 saille au moins radialement par rapport à l'anneau central 32'.

En outre, la deuxième collerette est inscrite dans un cercle ayant un deuxième diamètre $\varnothing$Col. Ce deuxième

diamètre ∅Col est inférieur au premier diamètre D1 mais supérieur au diamètre central D2. Par suite, la deuxième collerette 37 saille au moins radialement par rapport à l'anneau central 32'.

Cette gorge de dégagement 38 s'étend alors selon l'axe de symétrie AX entre la deuxième collerette 37 et l'anneau de liaison 35 sur une longueur dite « longueur de gorge B ».

Cette gorge de dégagement 38 débouche alors sur le pied de l'anneau de liaison 35. Cet anneau de liaison présente un diamètre ∅brid qui est inférieur au deuxième diamètre ∅Col mais supérieur au diamètre central D2.

En outre, la deuxième collerette 37 présente des dimensions spécifiques pour ne pas perturber l'opération de soudure.

En particulier, le deuxième diamètre ∅Col est fonction au moins de la longueur de gorge B et d'une distance prédéterminée Li minimale devant séparer la deuxième collerette 37 et la face conique 22.

Cette distance prédéterminée Li est déterminée par essais. Eventuellement, cette distance prédéterminée Li est au moins égale à 10 millimètres.

Dès lors, on détermine ledit deuxième diamètre ∅Col en fonction de la longueur de gorge B et de la distance prédéterminée Li.

Eventuellement, les caractéristiques de l'organe de liaison mécanique 30 sont aussi déterminées à l'aide des données d'entrée précitées et de données intermédiaires.

Ainsi, le deuxième diamètre ∅Col peut être déterminé à l'aide de la relation suivante :

$$\varnothing Col = \varnothing brid + 2*(B/tg\ \alpha - Li/\sin\ \alpha)$$

où « ∅Col » représente le deuxième diamètre, « ∅brid » représente un diamètre de l'anneau de liaison, « B » représente ladite longueur de gorge, « tga » représente la tangente de l'angle de référence, « Li » représente ladite distance prédéterminée, « sin α » représente le sinus de l'angle de référence, « * » représente le signe de la multiplication, « / » représente le signe de la division, « + » représente le signe de l'addition et « - » représente le signe de la soustraction.

L'angle de référence α peut être un angle aigu compris entre 0 et 90 degrés inclus.

La longueur de gorge B peut résulter de contraintes de fabrication industrielles.

De plus, le diamètre ∅brid de l'anneau de liaison 35 peut être fonction d'au moins un jeu radial Gp à garantir entre le tube 25 et l'anneau de liaison 35 avant la soudure. Les dimensions du tube étant des données d'entrée, l'anneau de liaison est dimensionné en fonction du tube et d'un jeu radial à respecter.

Ce diamètre de l'anneau de liaison 35 est alors éventuellement déterminé à l'aide de la relation suivante :

$$\varnothing brid = \varnothing tub - 2*e1 - 2*Gp$$

où « ∅brid » représente le diamètre de l'anneau de liaison, « ∅tub » représente un diamètre prédéterminé de ladite paroi intérieure, « e1 » représente ladite épaisseur de tube, « Gp » représente ledit jeu radial, « * » représente le signe de la multiplication, et « - » représente le signe de la soustraction.

Le jeu radial Gp peut être compris entre le double de l'épaisseur de tube e1 et le triple de l'épaisseur de tube e1, ou peut être une constante prédéterminée par essais.

Par ailleurs, l'anneau de liaison 35 peut s'étendre à partir du plan de référence Pref selon l'axe de symétrie AX sur une longueur dite « longueur d'extension Lt ». Cette longueur d'extension Lt est par exemple égale à la somme de la longueur d'induction Lc et d'une longueur prédéterminée dite « longueur dépassante Lb ». La longueur dépassante Lb est une donnée intermédiaire établie par exemple par essais en fonction des données d'entrée.

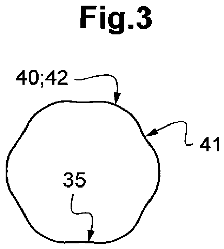

En référence à la figure 3, l'anneau de liaison 35 peut présenter circonférentiellement une succession de creux 41 et de protubérances 42. Les protubérances 42 représentent alors des lobes 40 de l'anneau de liaison 35.

Par ailleurs, le moyen d'isolation et de maintien 50 comporte deux gorges de positionnement aptes à accueillir les collerettes de l'organe de liaison mécanique 30.

Ainsi, le corps 51 du moyen d'isolation et de maintien présente une première gorge de positionnement 52 et une deuxième gorge de positionnement 53 aptes à accueillir respectivement la première collerette 34 et la deuxième collerette 37. Ce corps 51 peut être conformé à l'organe de liaison mécanique et à l'inducteur.

La deuxième collerette est alors en outre en appui plan longitudinalement contre une face délimitant la deuxième gorge de positionnement 53.

De plus, la portion annulaire de guidage 55 du moyen d'isolation et de maintien 50 comporte successivement selon l'axe de symétrie AX un anneau intermédiaire 56 puis un anneau d'extrémité 57.

L'anneau intermédiaire 56 s'étend à partir du corps 51 au niveau du plan de référence Pref sur une longueur dite « longueur intermédiaire « Lint ». Cette longueur intermédiaire Lint est égale à une différence entre la longueur d'induction Lc et une longueur de recouvrement Lwz prédéterminée. Cette longueur de recouvrement Lwz est une donnée intermédiaire déterminée par essais.

L'anneau intermédiaire 56 s'étend en outre radialement sur une épaisseur dite « épaisseur intermédiaire e2 » de l'anneau de liaison 35 jusqu'à la face interne 21.

Dès lors, l'anneau d'extrémité 57 s'étend selon l'axe de symétrie AX à partir de l'anneau intermédiaire 56 sur une longueur dite « longueur d'extrémité Lext ». Cette longueur d'extrémité Lext est égale à la somme de la longueur dépassante Lb et de la longueur de recouvrement Lwz.

L'anneau d'extrémité 57 s'étend en outre radialement sur une épaisseur dite « épaisseur d'extrémité e3 » de l'ordre du millimètre et inférieure à l'épaisseur intermédiaire e2. Dès lors, l'anneau d'extrémité est en contact avec la face interne 21 en affleurant une face supérieure de l'anneau intermédiaire qui est en contact avec la face interne 21.

Par suite, l'anneau d'extrémité est séparé radialement de l'anneau de liaison 35 par une espace présentant une hauteur égale à la somme du jeu radial Gp et de l'épaisseur de tube e1.

Par suite, le bout de tube 25 peut être agencé dans cet espace pour être radialement en contact avec l'anneau d'extrémité 57 et longitudinalement en butée contre l'anneau intermédiaire 56.

Enfin, l'organe d'isolation et de maintien 60 est interposé entre l'inducteur 15 et le tube, cet organe d'isolation et de maintien reposant au moins partiellement sur l'anneau d'extrémité 57.

Pour réaliser une soudure par impulsion magnétique, un opérateur positionne par exemple le tube sur un support prévu à cet effet et dispose l'organe d'isolation et de maintien autour du tube.

De plus, l'opérateur agence le moyen d'isolation et de maintien 50 sur l'organe de liaison mécanique 30. En particulier, les collerettes de l'organe de liaison mécanique sont agencées dans les gorges de positionnement du corps du moyen d'isolation et de maintien 50.

Eventuellement, le moyen d'isolation et de maintien 50 est agencé sur un support coulissant pour être déplacé en translation vers le tube. Ce déplacement induit le placement du moyen d'isolation et de maintien 50 contre l'inducteur. De plus, le tube est positionné dans l'espace entouré par l'anneau d'extrémité 57 du moyen d'isolation et de maintien 50, l'organe d'isolation et de maintien 60 étant aussi plaqué contre l'inducteur.

Dès lors, l'organe de liaison mécanique 30 est maintenu en position par les gorges de positionnement 52, 53 et par l'anneau intermédiaire 56. De même, le tube 25 est correctement maintenu en position par le moyen d'isolation et de maintien 50.

L'opérateur peut alors solliciter le dispositif de soudure pour réaliser la soudure. De manière étonnante, les dimensions particulières de la deuxième collerette n'empêchent pas le déroulement de cette soudure.

Naturellement, la présente invention est sujette à de nombreuses variations quant à sa mise en oeuvre. Bien que plusieurs modes de réalisation aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention telle que définie dans les revendications ci-jointes.

## Revendications

1. Organe de liaison mécanique (30) comprenant successivement selon un axe de symétrie (AX) longitudinal une première zone extrémale (31) libre et une deuxième zone extrémale (33) qui doit être soudée à un tube (25) donné par un dispositif de soudure (10) par impulsion magnétique, la première zone extrémale (31) comprenant une première collerette (34) inscrite dans un cercle présentant un premier diamètre (D1), ledit dispositif de soudure (10) par impulsion magnétique comprenant un inducteur (15) s'étendant radialement à partir d'une face interne (21) annulaire apte à être en regard de la deuxième zone extrémale (33), ledit inducteur (15) présentant une face conique (22) reliée à la face interne (21) au niveau d'un cercle d'interface (23), ladite face conique (22) étant apte à être en regard de la première collerette (34), ladite face conique (22) étant séparée d'un plan de référence (Pref) par un angle de référence ($\alpha$) aigu, ledit plan de référence (Pref) contenant ledit cercle d'interface (23), où ladite deuxième zone extrémale (33) comporte un anneau de liaison (35) qui s'étend longitudinalement à partir dudit plan de référence (Pref), l'anneau de liaison étant destiné à être inséré dans ledit tube pour être soudé au tube, ledit organe de liaison mécanique (30) comportant une collerette martyre dite « deuxième collerette (37) », ladite deuxième collerette étant reliée à la première collerette par un anneau central qui présente un diamètre central (D2), ladite deuxième collerette (37) étant inscrite dans un cercle ayant un deuxième diamètre ($\varnothing$Col) qui est inférieur au premier diamètre (D1), ledit organe de liaison mécanique (30) comportant une gorge de dégagement (38), ladite gorge de dégagement (38) s'étendant selon l'axe de symétrie (AX) entre la deuxième collerette (37) et ledit anneau de liaison (35) sur une longueur dite « longueur de gorge (B) », la gorge de dégagement (38) n'étant pas destinée à être recouverte par ledit tube, ledit deuxième diamètre ($\varnothing$Col) étant fonction au moins de ladite longueur de gorge (B) et d'une distance prédéterminée (Li) devant séparer ladite deuxième collerette (37) et ladite face conique (22),
**caractérisé par**

l'anneau de liaison étant inscrit dans un cercle présentant un diamètre ($\varnothing$brid) qui est inférieur au deuxième diamètre ($\varnothing$Col) ledit diamètre central (D2) étant inférieur au premier diamètre (D1) et au deuxième diamètre ($\varnothing$Col) et au diamètre ($\varnothing$brid) dudit cercle et à un diamètre interne de l'anneau de liaison, la gorge de dégagement (38) ayant un diamètre qui est inférieur au diamètre ($\varnothing$brid) dudit cercle et supérieur au diamètre central (D2).

2. Organe de liaison mécanique selon la revendication 1, **caractérisé en ce que** ledit deuxième diamètre ($\varnothing$Col) est déterminé à l'aide de la relation suivante :

$$\varnothing Col = \varnothing brid + 2 * (B / tg\ \alpha - Li / sin\ \alpha)$$

où « $\varnothing$Col » représente le deuxième diamètre, « $\varnothing$brid » représente un diamètre de l'anneau de liaison, « B » représente ladite longueur de gorge, « tga » représente la tangente de l'angle de référence, « Li » représente ladite distance prédéterminée, « sin $\alpha$ » représente le sinus de l'angle de référence, « * » représente le signe de la multiplication, « / » représente le signe de la division, « + » représente le signe de l'addition et « - » représente le signe de la soustraction.

3. Organe de liaison mécanique selon l'une quelconque des revendications 1 à 2,
**caractérisé en ce que** ladite distance prédéterminée (Li) est au moins égale à 10 millimètres.

4. Organe de liaison mécanique selon la revendication 2,
**caractérisé en ce que** ledit diamètre ($\varnothing$brid) de l'anneau de liaison (35) est fonction d'au moins un jeu radial (Gp) à garantir entre ledit tube (25) et ledit anneau de liaison (35) avant ladite soudure.

5. Organe de liaison mécanique selon la revendication 4,
**caractérisé en ce que**, ledit tube (25) s'étendant radialement d'une paroi intérieure (26) à souder à l'organe de liaison mécanique (30) vers une paroi extérieure (27) en regard de l'inducteur (15) sur une épaisseur donnée dite « épaisseur de tube (e1) », ledit diamètre ($\varnothing$brid) de l'anneau de liaison (35) est déterminé à l'aide de la relation suivante :

$$\varnothing brid = \varnothing tub - 2 * e1 - 2 * Gp$$

où « $\varnothing$brid » représente le diamètre de l'anneau de liaison, « $\varnothing$tub » représente un diamètre prédéterminé de ladite paroi intérieure, « e1 » représente ladite épaisseur de tube, « Gp » représente ledit jeu radial, « * » représente le signe de la multiplication, et « - » représente le signe de la soustraction.

6. Organe de liaison mécanique selon l'une quelconque des revendications 4 à 5,
**caractérisé en ce que**, ledit tube (25) s'étendant radialement d'une paroi intérieure (26) à souder à l'organe de liaison mécanique (30) vers une paroi extérieure (27) en regard de l'inducteur (15) sur une épaisseur donnée dite « épaisseur de tube (e1) », ledit jeu radial (Gp) est compris entre le double de ladite épaisseur de tube (e1) et le triple de ladite épaisseur de tube (e1).

7. Organe de liaison mécanique selon l'une quelconque des revendications 4 à 5,
**caractérisé en ce que** ledit jeu radial (Gp) est une constante prédéterminée.

8. Organe de liaison mécanique selon l'une quelconque des revendications 1 à 7,
**caractérisé en ce que** ledit anneau de liaison (35) s'étendant selon l'axe de symétrie (AX) sur une longueur dite « longueur d'extension (Lt) », ladite face interne (21) s'étendant selon l'axe de symétrie (AX) sur une longueur donnée dite « longueur d'induction (Lc) », ladite longueur d'extension (Lt) est égale à la somme de la longueur d'induction (Lc) et d'une longueur prédéterminée dite « longueur dépassante (Lb) ».

9. Organe de liaison mécanique selon l'une quelconque des revendications 1 à 8,
**caractérisé en ce que** ledit anneau de liaison (35) présente circonférentiellement une pluralité de lobes (40).

10. Procédé de fabrication d'un organe de liaison mécanique (30) comprenant successivement selon un axe de symétrie (AX) longitudinal une première zone extrémale (31) libre et une deuxième zone extrémale (33) qui doit être soudée à un tube (25) donné par un dispositif de soudure (10) par impulsion magnétique, la première zone extrémale (31) comprenant une première collerette (34) inscrite dans un cercle présentant un premier diamètre (D1), ledit dispositif de soudure (10) par impulsion magnétique comprenant un inducteur (15) s'étendant radialement à partir d'une face interne (21) annulaire destinée à être en regard de la deuxième zone extrémale (33) lors de la soudure, ledit inducteur (15) présentant une face conique (22) reliée à la face interne (21) au niveau d'un cercle d'interface (23), ladite face conique (22) étant en regard de la première collerette (34) lors de la soudure, ladite face conique (22) étant séparée d'un plan de référence (Pref) par un angle de référence (a) aigu, ledit plan de référence (Pref) contenant ledit cercle d'interface (23), où ladite deuxième zone extrémale (33) comportant un anneau de liaison (35) destiné à s'étendre longitudinalement à partir dudit plan de référence (Pref), l'anneau de liaison étant destiné à être inséré dans ledit tube pour être soudé au tube, une collerette dite « deuxième collerette (37) » est agencée sur ledit organe de liaison mécanique (30), ladite deuxième collerette (37) étant inscrite dans un cercle ayant un deuxième diamètre ($\varnothing$Col) qui est inférieur au premier diamètre (D1), une gorge de dégagement (38) étant agencée sur ledit organe de liaison mécanique (30), ladite gorge de dégagement (38) s'étendant selon l'axe de symétrie (AX) entre la deuxième collerette (37) et ledit anneau de liaison (35) sur une longueur dite « longueur de gorge (B) », la gorge de dégagement (38) n'étant pas destinée à être recouverte par ledit tube,
**caractérisé en ce que** :

on détermine ledit
deuxième diamètre ($\varnothing$Col) en fonction de ladite longueur de gorge (B) et d'une distance prédéterminée devant séparer ladite deuxième collerette (37) et ladite face conique (22), ledit deuxième diamètre ($\varnothing$Col) étant supérieur à un diamètre d'un cercle dans lequel est inscrit l'anneau de liaison,
et **en ce que** le diamètre central (D2) de l'anneau central est inférieur au premier diamètre (D1) de la collerette (34) et au deuxième diamètre ($\varnothing$Col) de la deuxième collerette (37) et au diamètre ($\varnothing$brid) de l'anneau de liaison (35), et la gorge de dégagement (38) a un diamètre qui est inférieur au diamètre ($\varnothing$brid) et supérieur au diamètre central (D2).

11. Ensemble soudé (1) muni d'un tube (25) et d'un organe de liaison mécanique (30),
**caractérisé en ce que** ledit organe de liaison mécanique (30) est selon l'une des revendications 1 à 9, ledit tube (25) étant soudé à l'anneau de liaison (30), ladite gorge de dégagement (38) n'étant pas recouverte par ledit tube (25).

12. Procédé de fabrication d'un ensemble soudé (1) selon la revendication 11,
**caractérisé en ce que** ledit procédé comporte les étapes suivantes :

- fabrication de l'organe de liaison mécanique (30) selon la revendication 10,
- agencement d'un organe d'isolation et de maintien autour dudit organe de liaison (30) et dudit tube (25),
- soudure dudit tube (25) à l'anneau de liaison (30) par impulsion magnétique, ladite gorge de dégagement (38) n'étant pas recouverte par ledit tube (25).

**Patentansprüche**

1. Mechanisches Verbindungselement (30), das nacheinander entlang einer Symmetrielängsachse (AX) eine freie erste Endzone (31) und eine zweite Endzone (33) umfasst, die mit einem gegebenen Rohr (25) durch eine Magnetpulsschweißvorrichtung (10) verschweißt werden soll,

wobei die erste Endzone (31) einen ersten Flansch (34) umfasst, der in einem Kreis mit einem ersten Durchmesser (D1) eingeschrieben ist, wobei die Magnetpulsschweißvorrichtung (10) einen Induktor (15) umfasst, der sich radial von einer ringförmigen Innenfläche (21) aus erstreckt, die geeignet ist, der zweiten Endzone (33) zugewandt zu sein, der Induktor (15) eine konische Fläche (22) aufweist, die mit der Innenfläche (21) an einem Übergangskreis (23) verbunden ist, wobei die konische Fläche (22) geeignet ist, dem ersten Flansch (34) zugewandt zu sein, wobei die konische Fläche (22) von einer Bezugsebene (Pref) durch einen spitzen Bezugswinkel ($\alpha$) getrennt ist, die Bezugsebene (Pref) den Übergangskreis (23) enthält,
wobei die zweite Endzone (33) einen Verbindungsring (35) aufweist, der sich in Längsrichtung von der Bezugsebene (Pref) aus erstreckt, wobei der Verbindungsring dazu bestimmt ist, in das Rohr eingesetzt zu werden, um mit dem Rohr verschweißt zu werden, wobei das mechanische Verbindungselement (30) einen als "zweiter Flansch (37)" bezeichneten Anschlagflansch umfasst, wobei der zweite Flansch mit dem ersten Flansch durch einen zentralen Ring verbunden ist, der einen zentralen Durchmesser (D2) aufweist, wobei der zweite Flansch (37) in einem Kreis mit einem zweiten Durchmesser ($\varnothing$Col) eingeschrieben ist, der kleiner als der erste Durchmesser (D1) ist, wobei das mechanische Verbindungselement (30) eine Abstandsnut (38) aufweist, die Abstandsnut (38) sich entlang der Symmetrieachse (AX) zwischen dem zweiten Flansch (37) und dem Verbindungsring (35) über eine als "Nutlänge (B)" bezeichnete Länge erstreckt, wobei die Abstandsnut (38) nicht dazu bestimmt ist, von dem Rohr verdeckt zu werden, wobei der zweite Durchmesser (⌀Col) eine Funktion mindestens der Nutlänge (B) und eines vorbestimmten Abstandes (Li) ist, der den zweiten Flansch (37) von der konischen Fläche (22) trennen soll,

**dadurch gekennzeichnet, dass**

der Verbindungsring in einen Kreis mit einem Durchmesser (⌀brid) eingeschrieben ist, der kleiner als der zweite Durchmesser (⌀Col) ist, dass der zentrale Durchmesser (D2) kleiner ist als der erste Durchmesser (D1), der zweite Durchmesser (⌀Col) und der Durchmesser (⌀brid) des Kreises und als ein Innendurchmesser des Verbindungsrings ist, und dass die Abstandsnut (38) einen Durchmesser aufweist, der kleiner als der Durchmesser (⌀brid) des Kreises und größer als der zentrale Durchmesser (D2) ist.

2. Mechanisches Verbindungselement nach Anspruch 1,

**dadurch gekennzeichnet, dass** der zweite Durchmesser (⌀Col) unter Verwendung der folgenden Beziehung bestimmt ist:

$$\varnothing Col = \varnothing brid + 2*(B/tg\ \alpha - Li/sin\ \alpha)$$

wobei "⌀Col" den zweiten Durchmesser darstellt, "⌀brid" einen Durchmesser des Verbindungsrings darstellt, "B" die Nutlänge darstellt, "tg$\alpha$" den Tangens des Bezugswinkels darstellt, "Li" den vorbestimmten Abstand darstellt, "sin $\alpha$" den Sinus des Bezugswinkels darstellt, "*" das Multiplikationszeichen darstellt, "/" das Divisionszeichen darstellt, "+" das Additionszeichen darstellt und "-" das Subtraktionszeichen darstellt.

3. Mechanisches Verbindungselement nach einem der Ansprüche 1 bis 2,

**dadurch gekennzeichnet, dass** der vorgegebene Abstand (Li) mindestens gleich 10 Millimetern ist.

4. Mechanisches Verbindungselement nach Anspruch 2,

**dadurch gekennzeichnet, dass** der Durchmesser (⌀brid) des Verbindungsrings (35) eine Funktion von mindestens einem Radialspiel (Gp) ist, das zwischen dem Rohr (25) und dem Verbindungsring (35) vor dem Schweißen einzuhalten ist.

5. Mechanisches Verbindungselement nach Anspruch 4,

**dadurch gekennzeichnet, dass** sich das Rohr (25) radial von einer mit dem mechanischen Verbindungselement (30) zu verschweißenden Innenwand (26) zu einer dem Induktor (15) zugewandten Außenwand (27) über eine gegebene Dicke, als "Rohrdicke (e1)" bezeichnet, erstreckt, wobei der Durchmesser (⌀brid) des Verbindungsrings (35) unter Verwendung der folgenden Beziehung bestimmt ist:

$$\varnothing brid = \varnothing tub - 2*e1 - 2*Gp$$

wobei "⌀brid" den Durchmesser des Verbindungsringes darstellt, "⌀tub" einen vorgegebenen Durchmesser der Innenwand darstellt, "e1" die Rohrdicke darstellt, "Gp" das Radialspiel darstellt, "*" das Multiplikationszeichen darstellt und "-" das Subtraktionszeichen darstellt.

6. Mechanisches Verbindungselement nach einem der Ansprüche 4 bis 5,

**dadurch gekennzeichnet, dass** sich das Rohr (25) radial von einer mit dem mechanischen Verbindungselement (30) zu verschweißenden Innenwand (26) zu einer dem Induktor (15) zugewandten Außenwand (27) über eine gegebene Dicke, als "Rohrdicke (e1) bezeichnet, erstreckt, wobei das radiale Spiel (Gp) zwischen dem Doppelten der Rohrdicke (e1) und dem Dreifachen der Rohrdicke (e1) liegt.

7. Mechanisches Verbindungselement nach einem der Ansprüche 4 bis 5,

   **dadurch gekennzeichnet, dass** das radiale Spiel (Gp) eine vorgegebene Konstante ist.

8. Mechanisches Verbindungselement nach einem der Ansprüche 1 bis 7,

   **dadurch gekennzeichnet, dass** sich der Verbindungsring (35) entlang der Symmetrieachse (AX) über eine als "Ausdehnungslänge (Lt)" bezeichnete Länge erstreckt, dass sich die Innenfläche (21) entlang der Symmetrieachse (AX) über eine gegebene Länge, als "Induktionslänge (Le)" bezeichnet, erstreckt, wobei die Ausdehnungslänge (Lt) gleich der Summe der Induktionslänge (Lc) und einer vorgegebenen Länge, als "Überstandlänge (Lb)" bezeichnet, ist.

9. Mechanisches Verbindungselement nach einem der Ansprüche 1 bis 8,

   **dadurch gekennzeichnet, dass** der Verbindungsring (35) in Umfangsrichtung eine Mehrzahl von Lappen (40) aufweist.

10. Verfahren zur Herstellung eines mechanischen Verbindungselements (30), das nacheinander entlang einer Symmetrielängsachse (AX) eine freie erste Endzone (31) und eine zweite Endzone (33) umfasst, die mit einem gegebenen Rohr (25) durch eine Magnetpulsschweißvorrichtung (10) verschweißt werden soll, wobei die erste Endzone (31) einen ersten Flansch (34) umfasst, der in einem Kreis mit einem ersten Durchmesser (D1) eingeschrieben ist, wobei die Magnetpulsschweißvorrichtung (10) einen Induktor (15) umfasst, der sich radial von einer ringförmigen Innenfläche (21) erstreckt, die vorgesehen ist, um beim Schweißen der zweiten Endzone (33) zugewandt zu sein, und der Induktor (15) eine konische Fläche (22) aufweist, die mit der Innenfläche (21) an einem Übergangskreis (23) verbunden ist,

    wobei die konische Fläche (22) dem ersten Flansch (34) beim Schweißen zugewandt ist, wobei die konische Fläche (22) von einer Bezugsebene (Pref) durch einen spitzen Bezugswinkel (α) getrennt ist, die Bezugsebene (Pref) den Übergangskreis (23) enthält,
    wobei die zweite Endzone (33) einen Verbindungsring (35) aufweist, der sich in Längsrichtung von der Bezugsebene (Pref) erstreckt, wobei der Verbindungsring dazu bestimmt ist, in das Rohr eingesetzt zu werden, um mit dem Rohr verschweißt zu werden, wobei ein als "zweiter Flansch (37)" bezeichneter Flansch an dem mechanischen Verbindungselement (30) angebracht ist, wobei der zweite Flansch (37) in einem Kreis mit einem zweiten Durchmesser (∅Col) eingeschrieben ist, der kleiner als der erste Durchmesser (D1) ist, wobei eine Abstandsnut (38) an dem mechanischen Verbindungselement (30) gebildet ist, die Abstandsnut (38) sich entlang der Symmetrieachse (AX) zwischen dem zweiten Flansch (37) und dem Verbindungsring (35) über eine als "Nutlänge (B)" bezeichnete Länge erstreckt, wobei die Abstandsnut (38) nicht dazu bestimmt ist, von dem Rohr verdeckt zu werden,
    **dadurch gekennzeichnet, dass** der zweite Durchmesser (∅Col) als Funktion mindestens der Nutlänge (B) und eines vorbestimmten Abstandes bestimmt wird, der den zweiten Flansch (37) von der konischen Fläche (22) trennen soll, wobei der zweite Durchmesser (∅Col) größer ist als ein Durchmesser eines Kreises, in den der Verbindungsring eingeschrieben ist,
    und dass der zentrale Durchmesser (D2) des zentralen Rings kleiner ist als der erste Durchmesser (D1) des Flansches (34), der zweite Durchmesser (∅Col) des zweiten Flansches (37) und der Durchmesser (∅brid) des Verbindungsrings (35), wobei die Abstandsnut (38) einen Durchmesser aufweist, der kleiner als der Durchmesser (∅brid) und größer als der zentrale Durchmesser (D2) ist.

11. Geschweißte Baugruppe (1) mit einem Rohr (25) und einem mechanischen Verbindungselement (30), **dadurch gekennzeichnet, dass** das mechanische Verbindungselement (30) nach einem der Ansprüche 1 bis 9 ist, wobei das Rohr (25) mit dem Verbindungsring (30) verschweißt ist und die Abstandsnut (38) nicht durch das Rohr (25) verdeckt ist.

12. Verfahren zum Herstellen einer geschweißten Baugruppe (1) nach Anspruch 11, **dadurch gekennzeichnet, dass** das Verfahren die folgenden Schritte umfasst:

    Herstellen des mechanischen Verbindungselements (30) nach Anspruch 10,
    Anbringen eines Isolier- und Halteelements um das Verbindungselement (30) und das Rohr (25) herum,
    Verschweißen des Rohres (25) mit dem Verbindungsring (30) durch Magnetimpuls, wobei die Abstandsnut (38) nicht von dem Rohr (25) überdeckt ist.

**Claims**

1.  Mechanical link member (30) comprising successively in a longitudinal axis of symmetry (AX) a first free end zone (31) and a second end zone (33) which is to be welded to a given tube (25) by a magnetic pulse welding device (10), the first end zone (31) comprising a first collar (34) inscribed in a circle having a first diameter (D1), said magnetic pulse welding device (10) comprising an inductor (15) extending radially from an inner annular face (21) able to be facing the second end zone (33), said inductor (15) having a tapered face (22) connected to the inner face (21) at an interface circle (23), said tapered face (22) being able to face the first collar (34), said tapered face (22) being separated from a reference plane (Pref) by an acute reference angle ($\alpha$), said reference plane (Pref) containing said interface circle (23), where said second end zone (33) comprises a link ring (35) which extends longitudinally from said reference plane (Pref), the link ring being designed to be inserted in said tube to be welded to the tube, said mechanical link member (30) comprising a martyr collar called "second collar (37)", said second collar being connected to the first collar by a central ring which has a central diameter (D2), said second collar (37) being inscribed in a circle having a second diameter ($\varnothing$Col) which is less than the first diameter (D1), said mechanical link member (30) comprising an undercut groove (38), said undercut groove (38) extending in an axis of symmetry (AX) between the second collar (37) and said link ring (35) over a length called "groove length (B)", the undercut groove (38) not being designed to be covered by said tube, the second diameter ($\varnothing$Col) being a function at least of said groove length (B) and a predetermined distance (Li) having to separate said second collar (37) and said tapered face (22), **characterised by** the link ring being inscribed in a circle having a diameter ($\varnothing$brid) which is less than the second diameter ($\varnothing$Col) said central diameter (D2) being less than the first diameter (D1) and the second diameter ($\varnothing$Col) and the diameter ($\varnothing$brid) of said circle and less than an inner diameter of the link ring, the undercut groove (38) having a diameter that is less than the diameter ($\varnothing$brid) of said circle and greater than the central diameter (D2).

2.  Mechanical link member according to claim 1, **characterised in that** said second diameter ($\varnothing$Col) is determined using the following relationship:

$$\varnothing Col = \varnothing brid + 2*(B/\mathrm{tg}\,\alpha - Li/\sin\alpha)$$

where "$\varnothing$Col" represents the second diameter, "$\varnothing$brid" represents a diameter of the link ring, "B" represents said groove length, "tg$\alpha$" represents the tangent of the reference angle, "Li" represents said predetermined distance, "sin $\alpha$" represents the sinus of the reference angle, "*" represents the multiplication sign, "/" represents the division sign, "+" represents the addition sign and "-" represents the subtraction sign.

3.  Mechanical link member according to any one of claims 1 to 2, **characterised in that** said predetermined distance (Li) is at least equal to 10 millimetres.

4.  Mechanical link member according to claim 2, **characterised in that** said diameter ($\varnothing$brid) of the link ring (35) is a function of at least a radial clearance (Gp) to be ensured between said tube (25) and said link ring (35) before said welding.

5.  Mechanical link member according to claim 4, **characterised in that**, said tube (25) extending radially from an inner wall (26) to be welded to the mechanical link member (30) towards an outer wall (27) facing the inductor (15) over a given thickness called "tube thickness (e1)", said diameter ($\varnothing$brid) of the link ring (35) is determined using the following relationship:

$$\varnothing brid = \varnothing tub - 2*e1 - 2*Gp$$

where "$\varnothing$brid" represents the diameter of the link ring, "$\varnothing$tub" represents a predetermined diameter of said inner wall, "e1" represents said tube thickness, "Gp" represents said radial clearance, "*" represents the multiplication sign, and "-" represents the subtraction sign.

6.  Mechanical link member according to any one of claims 4 to 5, **characterised in that**, said tube (25) extending radially from an inner wall (26) to be welded to the mechanical link member (30) towards an outer wall (27) facing the inductor (15) over a given thickness called "tube thickness (e1)", said radial clearance (Gp) is between the double of said tube thickness (e1) and the triple of said tube thickness (e1).

7. Mechanical link member according to any one of claims 4 to 5, **characterised in that** said radial clearance (Gp) is a predetermined constant.

8. Mechanical link member according to any one of claims 1 to 7, **characterised in that** said link ring (35) extending in an axis of symmetry (AX) over a length called "extension length (Lt)", said inner face (21) extending in an axis of symmetry (AX) over a given length called "induction length (Lc)", said extension length (Lt) is equal to the sum of the induction length (Lc) and a predetermined length called "projecting length (Lb)".

9. Mechanical link member according to any one of claims 1 to 8, **characterised in that** said link ring (35) has circumferentially a plurality of lobes (40).

10. Method of manufacturing a mechanical link member (30) comprising successively in a longitudinal axis of symmetry (AX) a first free end zone (31) and a second end zone (33) which is to be welded to a given tube (25) by a magnetic pulse welding device (10), the first end zone (31) comprising a first collar (34) inscribed in a circle having a first diameter (D1), said magnetic pulse welding device (10) comprising an inductor (15) extending radially from an inner annular face (21) designed to be facing the second end zone (33) during the welding, said inductor (15) having a tapered face (22) connected to the inner face (21) at an interface circle (23), said tapered face (22) facing the first collar (34) during the welding, said tapered face (22) being separated from a reference plane (Pref) by an acute reference angle ($\alpha$), said reference plane (Pref) containing said interface circle (23), where said second end zone (33) comprising a link ring (35) designed to extend longitudinally from said reference plane (Pref), the link ring being designed to be inserted in said tube to be welded to the tube, a collar called "second collar (37)" is arranged on said mechanical link member (30), said second collar (37) being inscribed in a circle having a second diameter ($\varnothing$Col) which is less than the first diameter (D1), an undercut groove (38) being arranged on said mechanical link member (30), said undercut groove (38) extending in an axis of symmetry (AX) between the second collar (37) and said link ring (35) over a length called "groove length (B)", the undercut groove (38) not being designed to be covered by said tube, **characterised in that**:

said second diameter ($\varnothing$Col) is determined according to said groove length (B) and a predetermined distance having to separate said second collar (37) and said tapered face (22), said second diameter ($\varnothing$Col) being greater than a diameter of a circle in which is inscribed the link ring,
and **in that** the central diameter (D2) of the central ring is less than the first diameter (D1) of the collar (34) and the second diameter ($\varnothing$Col) of the second collar (37) and the diameter ($\varnothing$brid) of the link ring (35), and the undercut groove (38) has a diameter which is less than the diameter ($\varnothing$brid) and greater than the central diameter (D2).

11. Welded assembly (1) provided with a tube (25) and a mechanical link member (30), **characterised in that** said mechanical link member (30) is according to one of the claims 1 to 9, said tube (25) being welded to the link ring (30), said undercut groove (38) not being covered by said tube (25).

12. Method of manufacturing a welded assembly (1) according to claim 11, **characterised in that** said method comprises the following steps:

- manufacture of the mechanical link member (30) according to claim 10,
- arrangement of an isolating and holding member around said link member (30) and said tube (25),
- welding said tube (25) to the link ring (30) by magnetic pulse, said undercut groove (38) not being covered by said tube (25).

**Fig.1**

**Fig.2**

# Fig.3

40;42

41

35

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2450145
- EP 1649963 A
- WO 2014092871 A
- EP 1342530 A
- US 20040089698 A
- CN 204094301 U
- US 5981921 A
- EP 0967428 A